# EUROPEAN PATENT APPLICATION

(11) **EP 2 492 481 A1**
(43) Date of publication of application: **29.08.2012**
(21) Application number: 11155332.7
(22) Date of filing: 22.02.2011
(51) Int. Cl.: F02D 41/22, G01N 15/06, G01N 27/02

(54) **Soot sensor functional capability monitoring**

(71) Applicant: Delphi Technologies Holding S.à.r.l., 4940 Bascharage (LU)
(72) Inventor: Van Marion, Willem, 8393, Olm (LU)
(74) Representative: Gregory, John David Charles

(57) **Abstract**

A method of monitoring functional capability of a soot sensor (10) that is responsive to deposition of soot (18) from an exhaust gas stream on a sensor surface (14) comprises acquiring a measurement signal (61) of the soot sensor and running a plausibility check, in which it is ascertained whether the measurement signal agrees with an expected finding (66). According to the invention it is detected whether conditions are present, on which liquid, e.g. water, from the exhaust gas stream condensates on the sensor surface. Additionally or alternatively, such conditions are produced. The plausibility check then includes ascertaining whether the measurement signal reflects (60) the condensation of liquid.

## Description

### Technical field

The present invention generally relates to the field of soot sensing, in particular to monitoring the functional capability of a soot sensor.

### Background Art

It is currently possible to meet the requirements of the EU5 and US MY 2010-2012 emission regulations using a differential pressure sensor (also known as a "Delta P sensor"). Such a sensor can detect efficiency and/or malfunctioning of particulate filter by measuring the pressure in the exhaust stream. If the particulate filter is damaged, e.g. it is cracked, the actual pressure reading will differ from that which is expected and a fault can be diagnosed.

Upcoming emission regulations (EU6, US MY2013) prescribe a significant reduction in the allowable level of tail pipe emissions in comparison to the current EU5 and US MY 2010-2012 legislation. A consequence of that change will be that differential pressure sensors will not be able to detect a failure reliably (in the sense of the future regulations) of the particulate filter. For robust detection of a reduced filtration efficiency causing tailpipe soot emissions to exceed the OBD (On-Board Diagnostic) threshold a soot sensor installed downstream of the particulate filter will thus be required.

Soot sensors of various types are known today or under development. Patent application WO 2007/000446, for instance, discloses a soot sensor with at least two electrodes that are spaced from one another by a small gap and between which electrical resistance decreases as soot deposits from exhaust gas and bridges the gap between them. The soot sensor comprises a heating element to burn off the soot deposit after each measurement. US application 2007/0158191 describes a soot sensor of essentially the same construction with an additional highly resistive protection layer applied on top of the electrodes. As soot is deposited on the protective layer, the resistance between the electrodes decreases. US 2009/0056416 discloses a particulate matter sensor with two mutually isolated electrodes, a high-voltage electrode and a detection electrode, which are arranged in facing relationship in an exhaust gas stream. The particulate matter is measured either by measuring a charge that accumulates on the detection electrode or a voltage that results from the accumulation of that charge on the detection electrode. One may think of other soot sensors, e.g. sensors that measure the change of capacitance between at least two electrodes that results from deposition of soot in-between the electrodes, or optical soot sensors.

It has been recognized that it is necessary to be able to detect if the soot sensor is working correctly. Simple faults, such as a short to ground, or a short to the battery, can be readily detected using simple diagnostic checks. It is more difficult to check the plausibility / rationality of the sensor, i.e. whether it is working correctly, when the output sensor signals lie within the normal range. For example, the soot sensor may be stuck in range and thus give an erroneous reading. US 2011/0015824 discloses a method for the functional diagnosis of a soot sensor, wherein the voltage coefficient of the sensor is measured and compared with a stored voltage coefficient of a fault-free soot sensor. US 2006/0107730 discloses a method for monitoring the functional capability of a particle sensor, wherein the actual measurements are compared with expected findings. The sensor is deemed defective if marked deviations between the measurement and the expected finding are detected.

Both of these methods suffer from the problem of "circular reference". The aims of these methods being to detect unduly high amounts of soot in an exhaust gas, the difficulty in diagnosing a sensor fault is to distinguish such fault from a correct (but exceptional) reading that reflects an abnormal condition of the exhaust gas. There is a substantial risk of detecting a sensor fault when the sensor is actually working properly but a problem occurred with the exhaust gas. There are methods that monitor the soot sensor signal over time during which a soot layer builds up on the sensor surface. However, if the soot sensor is arranged downstream of a modern particulate filter, only very small amounts of soot will arrive at the soot sensor. Consequently, it will take a relatively long time for soot to build up on the surface of the sensor to a level at which the sensor reading can be compared with a predicted value. In typical applications, however, it is not acceptable to have to wait for a long time before it can be determined if the sensor is working correctly. US 2006/0107730 monitors the behaviour of the soot sensor during regeneration of an upstream soot filter. The drawback is here that sensor diagnosis must be delayed until the particulate filter is regenerated.

### Technical problem

It is an object of the present invention to allow for faster detection of soot sensor malfunctioning. This object is achieved by a method as claimed in claim 1 or a device as claimed in claim 10.

### General Description of the Invention

A method of monitoring functional capability of a soot sensor that is responsive to deposition of soot from an exhaust gas stream on a sensor surface comprises acquiring a measurement signal of the soot sensor and running a plausibility check wherein it is ascertained whether the measurement signal agrees with an expected finding. According to the invention it is detected whether conditions are present, on which liquid, e.g. water, from the exhaust gas stream condensates on the sensor surface. Additionally or alternatively such conditions are specifically produced, e.g. by actively cooling the sensor surface. The plausibility check then includes ascertaining whether the measurement signal reflects the condensation of liquid.

An advantage of the present method is that conditions on which condensation of water from the exhaust gas occurs are typically present in the exhaust gas system of a combustion engine shortly after a cold start. Assuming the exhaust gas line is dry and at ambient temperature when the engine is started, water from the warm exhaust gas will condensate on the relatively cold walls of the exhaust gas line and, in particular, on the surface of the soot sensor. As the sensor surface then progressively heats up, the water will evaporate after a short time. The presence of water on the sensor surface reflects in the measurement signal output by the soot sensor (e.g. as a drop in resistance or an increase in capacitance between a pair of electrodes, or the like). If the fingerprint of condensing water is absent from the measurement signal when it is expected (i.e. when the physical circumstances are such that condensation should take place), than it is highly likely that the soot sensor is defective. In comparison with the methods for soot sensor diagnosis addressed hereinabove, the plausibility check employed by the present invention may be carried out very early after the combustion engine has been started. As those skilled will appreciate, the present method is especially well suited for use on a motor vehicle, since cold starts are frequent. Therefore, the soot sensor is preferably arranged in the exhaust gas line of a compression-ignition engine and the plausibility check is preferably run immediately after a cold start of the compression-ignition engine.

Conditions for the presence of condensation could be assumed to be present after each cold start (e.g. after the engine has remained switched off for a certain time). Preferably however, the detection of presence of conditions for condensation or evaporation comprises a measurement or an estimation of the temperature on the sensor surface. It shall be noted that the temperature may be measured directly on the sensor surface. Alternatively, the temperature may be measured at another location of the exhaust system and the temperature on the sensor surface may then be estimated based on a mathematical model describing thermal properties of the exhaust system. The model may take into account e.g. the thermal capacity of the materials of the exhaust line, the mass flow rate of the exhaust gas, the outside temperature, etc. Yet another possibility is to estimate the temperature of the sensor surface using engine parameters, such as e.g. the quantity of injected fuel, mass air flow, EGR rate, engine efficiency etc. as input parameters of a mathematical model providing the evolution of the temperature of the soot sensor surface as a function of the engine parameters.

Preferably, the method also comprises the detection of the presence of conditions for evaporation of the liquid from the sensor surface. Additionally or alternatively, the method may also comprise dedicatedly producing such conditions, e.g. by heating the soot sensor surface. The plausibility check may then include ascertaining whether the measurement signal reflects the evaporation of liquid. For example, if condensation of water from the exhaust gas translates into a drop of the measurement signal output by the soot sensor, subsequent evaporation of the water will lead to a rise of the measurement signal. If the measurement signal exhibits not only the drop but also the subsequent rise, one improves the likelihood that the sensor is working properly.

The plausibility check may be run each time the presence of conditions for condensation of the liquid is detected. Condensate may form on the sensor surface at other times than start up. In a motor vehicle, the exhaust system could cool down sufficiently to permit condensation after a 'long' downhill section, where there is no injection of fuel.

Preferably, a warning signal indicating a malfunction of the soot sensor is output if the plausibility check fails in a predetermined number of successive runs. The warning signal could be output after the plausibility check has failed only once. Preferably, however, the warning signal is output after the plausibility check has consecutively failed at least two times.

Advantageously, the sensor surface of the soot sensor is purged from soot deposited thereon by heating the sensor surface, e.g. at predetermined time intervals or after a shutdown of the compression-ignition engine. To this end, the soot sensor may be equipped with a heating element (e.g. a heating conductor). Such heating element could then also be used to heat the sensor surface in order to evaporate the condensed liquid.

An aspect of the present invention concerns a computer program (product) comprising instructions, which, when executed by a processor (e.g. of a soot sensor controller), cause the processor to carry out the method as described hereinabove.

Another aspect of the present invention concerns an exhaust gas treatment device for a compression-ignition (i.e. a Diesel) engine, comprising a soot sensor that is responsive to deposition of soot from an exhaust gas stream on the sensor surface and a sensor controller (such as e.g. a microprocessor, an application-specific integrated circuit, a field-programmable gate array, etc.) operatively connected with the soot sensor to receive a measurement signal from the soot sensor and configured to run a plausibility check that includes ascertaining whether the measurement signal agrees with an expected finding. The sensor controller is configured to detect presence of and/or to produce conditions for condensation of a liquid, e.g. water, from the exhaust gas stream on the sensor surface and the plausibility check includes ascertaining whether the measurement signal reflects the condensation of liquid. If the sensor controller is configured to actively produce the conditions for condensation of the liquid, the soot sensor preferably comprises a cooler, controlled by the sensor controller, to reduce the temperature on the sensor surface.

Advantageously, the sensor controller is configured to detect presence of and/or achieving conditions for evaporation of the liquid from the sensor surface. In this case, the plausibility check includes ascertaining whether the measurement signal reflects the evaporation of the liquid.

The exhaust gas treatment preferably comprises a particulate filter arranged upstream of the soot sensor.

The soot sensor preferably comprises a heating element (e.g. a heating conductor) to cause evaporation of the liquid from the sensor surface and/or to purge the sensor surface from soot deposited thereon.

The exhaust gas treatment device may comprise a temperature sensor operatively connected to the sensor controller, the sensor controller being configured to estimate a temperature on the sensor surface based upon a temperature signal received from the temperature sensor. Alternatively, the sensor controller may be operatively connected with an engine control unit to receive temperature data and/or operational data of the compression-ignition engine. The sensor controller may then estimate the temperature on the sensor surface based on the data received from the engine control unit. Optionally, the sensor controller may be fully or partially integrated in the engine control unit. The sensor controller and the engine control unit may thus share the tasks to be performed when the method according to the invention is carried out. For instance, the engine control unit could be configured to calculate the expected values with which the measurement signal is compared to check the plausibility of the measurement signal. This is considered an advantageous embodiment, since the engine control unit typically has all the relevant data and parameters at its disposition that are necessary to ascertain whether the conditions on the sensor surface are such that liquid may condense thereon.

The sensor controller is preferably configured to output a warning signal if the plausibility check fails in a predetermined number of successive runs.

### Brief Description of the Drawings

Further details and advantages of the present invention will be apparent from the following detailed description of not limiting embodiments with reference to the attached drawings, wherein:
Fig. 1 is a schematic perspective view of a soot sensor;
Fig. 2 is a schematic layout of a compression-ignition engine with its air intake passage and its exhaust system;
Fig. 3 is a graph illustrating a measurement signal of a soot sensor during a standardized driving cycle.

### Description of Preferred Embodiments

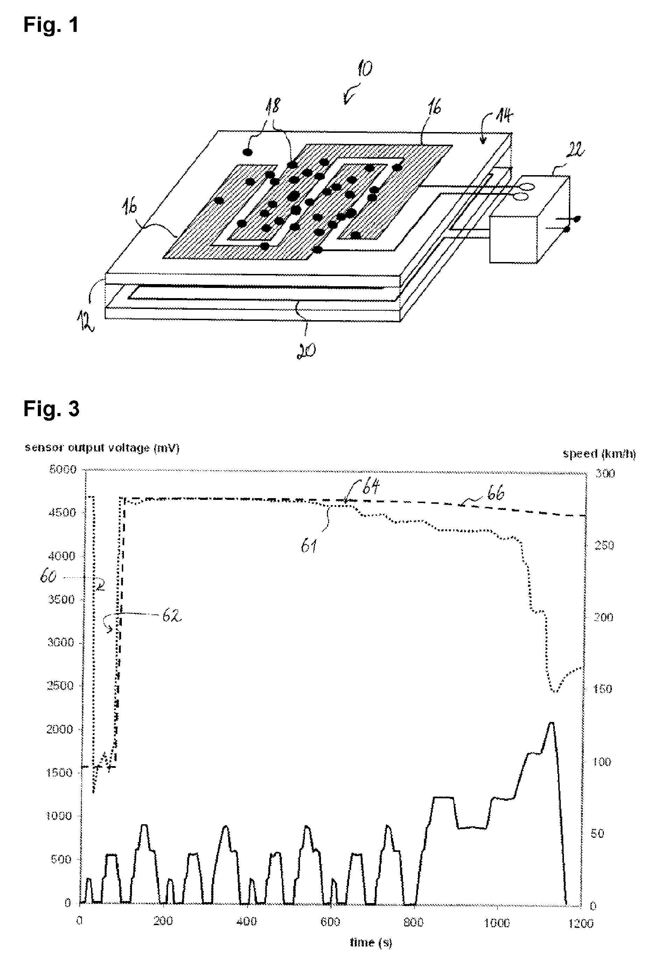

Fig. 1 shows an example of a soot sensor 10 that works according to a known principle (see e.g. US 2011/0015824 for reference). The soot sensor 10 comprises an insulating substrate 12 (e.g. made from ceramic) forming a sensor surface 14 exposed to the exhaust gas. Measurement electrodes 16 are arranged separate from each other on the sensor surface 14 in an interdigitated configuration. As long as the sensor surface 14 is free of soot particles, the electrodes 16 are electrically insulated from each other. When soot particles 18 deposit on the sensor surface 14, they eventually bridge the gap between the electrodes 16, allowing a current to flow between the electrodes 16 in response to a voltage applied between the electrodes 16. The more soot particles deposit on the sensor surface 14, the more conductive channels form between the electrodes 16 and the higher is the current measured. The soot sensor comprises a heating element 20 arranged in heat-conducting contact with the substrate 12. In order to purge the sensor surface 14 from soot, the soot sensor 10 is heated to a temperature at which the soot is oxidized by the residual oxygen contained in the exhaust gas. The materials of the soot sensor 10 are selected so as to withstand the burn-off temperature of the soot.

The soot sensor 10 further comprises a sensor controller 22 connected to the electrodes 16 and the heating element 20 in order to control operation thereof. The sensor is alternately operated in an accumulation and a regeneration mode. During the accumulation mode, soot particles 18 deposit on the sensor surface 14, which changes the resistance between the electrodes 16. In accumulation mode, the sensor controller 22 attempts to drive a predetermined current across the electrodes 16 and measures the resulting voltage. The output voltage changes as the current is kept constant. During the regeneration mode, the sensor controller 22 drives a current across the heating element 20. The sensor is thereby heated to the burn-off temperature of soot, which is thus removed from the sensor surface 14.

The sensor controller 22 is configured to derive the concentration of soot in the exhaust gas (e.g. to detect any loss of filtration efficiency of a particulate filter arranged upstream of the soot sensor) as well as to diagnose the soot sensor itself. The sensor diagnostic comprises short-to-battery, short-to-ground and open circuit detections. In addition, the sensor controller 22 carries out a plausibility check to detect other types of error, e.g. if the soot sensor is stuck in range.

The plausibility check comprises the comparison of the measurement signal of the soot sensor with an expected behaviour thereof. In particular, the sensor controller 22 determines whether the measurement signal reflects condensation of water from the exhaust gas on the sensor surface 14 if condensation is expected based on the physical conditions at the soot sensor 10. When water condensates on the sensor surface 14, it shorts the electrodes 16, leading to a noticeable drop in resistance between them. It may be noted that pure water is a rather good insulator, so the conductivity between the electrodes 16 is in fact due to impurities dissolved in the water. In the environment of an exhaust gas line and in the presence of an exhaust gas flow, the water droplets forming on the sensor surface are sufficiently contaminated with impurities to guarantee conduction of current.

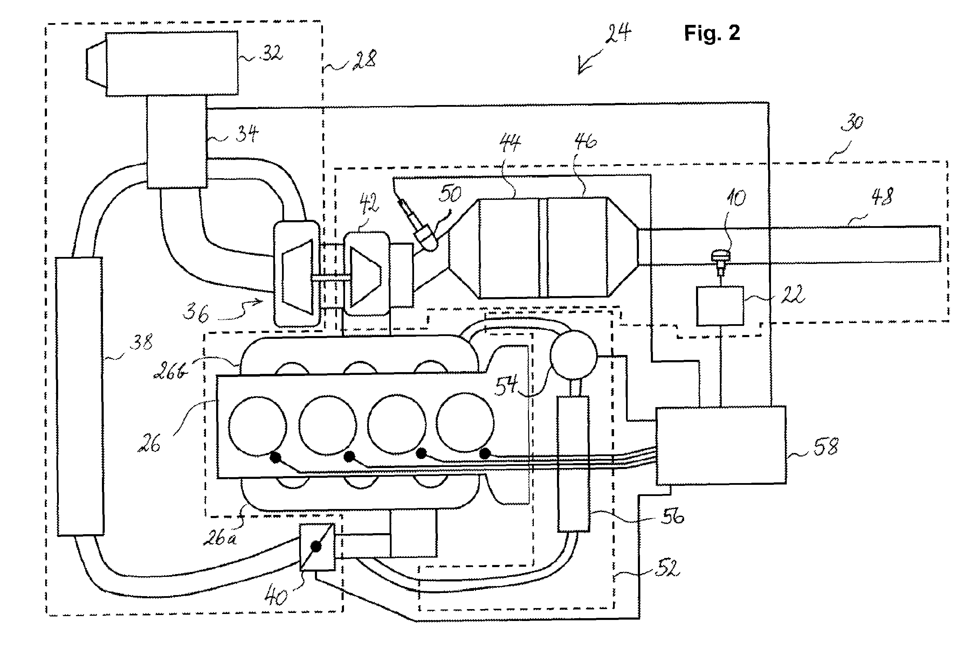

Fig. 2 shows a Diesel compression-ignition engine 24 of a vehicle. The engine 24 comprises an engine block 26 connected up-stream to an air intake passage 28 and down-stream to an exhaust system 30 with exhaust gas aftertreatment.

The air intake passage 28 comprises an air filter 32 to filter air draw from the outside into the engine, a mass air flow sensor 34, a turbocharger 36 an intercooler 38 and a throttle valve 40 connected upstream to intake manifold 26a.

Exhaust system 30 comprises the turbine 42 of turbocharger 36, connected downstream to the exhaust manifold 26b of the engine, an oxidation catalyst device 44 and a diesel particulate filter 46 arranged upstream of tailpipe 48.

The exhaust system 30 of Fig. 2 is equipped with several sensors for detecting the relevant exhaust gas parameters. A temperature sensor 50 measures exhaust gas temperature at the outlet of the turbocharger turbine 28. A soot sensor 10 is arranged in the tailpipe downstream of the particulate filter 46. The soot sensor may be of the resistive type discussed previously with reference to Fig. 1 but it may also be of another type (e.g. the capacitive type), provided that water condensing on the sensor surface reflects in the measurement signal output by the soot sensor.

The engine 24 is further equipped with an exhaust gas recirculation (EGR) device 52, comprising an EGR valve 54 and an EGR cooler 56. EGR works by recirculating a portion of the exhaust gas back into the combustion chambers of engine block 26. As diesel engines normally operate with excess air, they can operate with very high EGR rates, especially at low loads, where there is otherwise a very large amount of excess air.

The engine includes an engine control unit 58, such as e.g. a microprocessor, an application-specific integrated circuit, a field-programmable gate array or the like, which controls operation of the different components of engine 24, in particular the fuel injectors (not shown), the throttle valve 40, the EGR device 52. The engine control unit 58 is connected to various sensors, e.g. the mass airflow sensor 34, temperature sensor 50. Not all of the sensors that the engine control unit 58 may be connected to are shown in the drawing. The engine control unit 58 is also connected to the sensor controller 22 of the soot sensor 10.

The engine control unit 58 monitors the temperature that is measured by temperature sensor 50. That temperature signal is provided also to the sensor controller 22. The sensor controller then estimates the temperature on the soot sensor surface based the temperature measured by temperature sensor 50 and on a mathematical model describing the thermal properties of the exhaust system (e.g. the thermal capacity of the materials of the exhaust line, the mass flow rate of the exhaust gas, the outside temperature, etc.) If the temperature estimate is or falls below the dew point, the sensor controller expects to detect the "fingerprint" of condensing water in the measurement signal.

After a cold start of engine 24, water vapours will condensate on the exhaust system walls and the sensor surface. As a result, the sensor output voltage will reduce significantly, especially when no soot has yet accumulated on the sensor 10. As the engine and the entire exhaust system warms up, the temperature of the sensor surface will eventually exceed the dew point. The sensor will turn dry and will then have an output signal consistent with the amount of soot deposited on the sensor surface.

Fig. 3 illustrates the evolution of the measurement signal of the soot sensor 10 during a time interval of 20 minutes beginning at a cold start of the engine 24. In case of an initially dry exhaust system, the plausibility check run by the sensor controller 22 comprises detecting
1) a drop (illustrated at 60) in the measurement signal 61 (sensor output voltage, represented by the dotted line) immediately after engine start due to water condensing on the sensor surface;
2) an increase (illustrated at 62) of the measurement signal to its original value when the temperature estimate indicates that the dew point is reached;
3) a slight decrease (illustrated at 64) of the measurement signal over time due to accumulation of soot particles.

The (optional) third part of the plausibility check requires that the "normal" behaviour of the soot sensor 10 is known. It should only be used as a complement to the other parts of the plausibility check, since it will otherwise be difficult to distinguish between a malfunction of the particulate filter 46 upstream of the soot sensor and the a malfunction of the soot sensor itself.

In the example of Fig. 3, the dashed line 66 represents the behaviour of the measurement signal predicted by the sensor controller based upon the temperature signal other parameters, such as e.g. the current amount of fuel injected into the cylinders) received as an input. The steep decline of the sensor voltage 61 after about 600 s indicates a failure of the upstream particulate filter. In such situation (i.e. if there is substantial disagreement between the predicted signal and the actual measurement signal) the sensor controller 22 outputs a warning signal indicating the abnormally high soot concentration (or the failure of the particulate filter). If the soot sensor fails the plausibility check, the sensor controller outputs a warning signal indicating that the soot sensor is not working as it should. It shall be noted that any numerical values shown in Fig. 3, the aspects of the curves etc. are for illustration only. The actual aspects of the measurement signal and the predicted signal will depend on the type of soot sensor used and any processing of the measurement signal (such as e.g. scaling, inverting, offset correction, smoothing, etc.)

The plausibility check may further comprise the detection of whether the measurement signal changes as expected during regeneration of the soot sensor (i.e. burn-off of the soot).

It shall be noted that measuring or estimating the temperature on the sensor surface is not always required. For instance, the sensor controller 22 could be configured to expect a drop and a subsequent rise (within a predefined time interval) of the measurement signal after each cold start of the engine. (The engine control unit 58 may give the indication that a cold start is taking place to the sensor controller 22.) The soot sensor 10 could also be equipped with a cooling element (e.g. a thermoelectric cooler) controlled by the sensor controller 22. The sensor controller may then switch on the cooling element from time to time and detect whether condensation of water takes place in consequence. Similarly, instead of estimating when the temperature of the sensor surface 14 exceeds the dew point due to the heat of the exhaust gases and the heating up of the entire exhaust system 30, the sensor controller 22 could actively induce the evaporation of the water by controlling the heating element 20 (see Fig. 1) accordingly. Such heating having the aim of drying the sensor surface may be substantially shorter and/or less intensive than the heating performed for burning off the soot deposit.

The sensor controller 22 advantageously stores in memory the last soot sensor output before each engine stop in order to detect any changes after the engine is restarted.

A prerequisite for the robustness of the plausibility check is that condensed water produces a marked change in the measurement signal. If the sensor surface is already substantially loaded with soot at the beginning of the measurement, water will have a lesser impact on the measurement signal, making it more difficult for the sensor controller to assess whether the soot sensor is working properly. Therefore, it is recommended that the sensor surface is relatively clean at each engine start. More frequent sensor regeneration may be required to avoid prolonged operation of the sensor at soot accumulation levels that affect the robustness of the plausibility check.

It is an important advantage of this plausibility check that it may be performed immediately after start-up. Previous plausibility checks, relying on the expected signal changes caused by soot accumulation, take significantly longer. Furthermore, those plausibility checks cannot be started until after the condensation phase. With the plausibility check in accordance with the present invention, a much more reliable test result may be obtained after a significantly shorter time..

It should however be noted that water condensate may form on the sensor surface at other times than start up. There are driving situations, e.g. a long downhill ride, in which the exhaust system may cool down sufficiently to permit condensation. When such a situation occurs, the sensor controller may seize the opportunity to run an "unscheduled" plausibility check.

As is the case for all other diagnostics, the plausibility check is preferably run every driving cycle.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

### Legend:

- 10: Soot sensor
- 12: Substrate
- 14: Sensor surface
- 16: Measurement electrodes
- 18: Soot particles
- 20: Heating element
- 22: Sensor controller
- 24: Diesel engine
- 26: Engine block
- 26a: Intake manifold
- 26b: Exhaust manifold
- 28: Air intake passage
- 30: Exhaust system
- 32: Air filter
- 34: Mass air flow sensor
- 36: Turbocharger
- 38: Intercooler
- 40: Throttle valve
- 42: Turbocharger turbine
- 44: Oxidation catalyst
- 46: Diesel particulate filter
- 48: Exhaust pipe
- 50: Temperature sensor
- 52: EGR device
- 54: EGR valve
- 56: EGR cooler
- 58: Engine control unit
- 60: Drop in measurement signal due to water on sensor surface
- 61: Measurement signal
- 62: Increase in measurement signal due to evaporation of the water
- 64: Decrease in measurement signal due to accumulation of soot particles
- 66: Predicted measurement signal

## Claims

1. A method of monitoring functional capability of a soot sensor (10) responsive to deposition of soot (18) from an exhaust gas stream on a sensor surface (14), said method comprising
acquiring a measurement signal (61) of said soot sensor (10);
running a plausibility check wherein it is ascertained whether said measurement signal (61) agrees with an expected finding (66);
**characterized by**
detecting presence of and/or producing conditions for condensation of a liquid, e.g. water, from said exhaust gas stream on said sensor surface (14),
and in that said plausibility check comprises ascertaining whether said measurement signal (61) reflects (60) said condensation of liquid.

2. The method as claimed in claim 1, wherein said detection of presence of conditions for condensation or evaporation comprises a measurement or an estimation of temperature on said sensor surface (14).

3. The method as claimed in claim 1 or 2, comprising detection of presence of and/or achieving conditions for evaporation of said liquid from said sensor surface, wherein said plausibility check includes ascertaining whether said measurement signal (61) reflects (62) said evaporation of liquid.

4. The method as claimed in any one of claims 1 to 3, wherein said plausibility check is run each time the presence of conditions for condensation of said liquid is detected.

5. The method as claimed in any one of claims 1 to 4, comprising outputting a warning signal if said plausibility check fails in a predetermined number of successive runs.

6. The method as claimed in any one of claims 1 to 5, wherein said soot sensor is arranged in the exhaust gas line (30) of a compression-ignition engine (24).

7. The method as claimed in any one of claims 1 to 6, wherein said plausibility check is run immediately after a cold start of said compression-ignition engine (24).

8. The method as claimed in any one of claims 1 to 7, wherein said sensor surface (14) of said soot sensor (10) is purged from soot (18) deposited thereon by heating said sensor surface (14), e.g. at predetermined time intervals or after a shut-down of said compression-ignition engine (24).

9. Computer program comprising instructions, which, when executed by a processor, cause said processor to carry out the method as claimed in any one of claims 1 to 8.

10. Exhaust gas treatment device (30) for a compression-ignition engine (24), comprising
a soot sensor (10) having a sensor surface (14), said soot sensor (10) being responsive to deposition of soot (18) from an exhaust gas stream on said sensor surface (14);
a sensor controller (22) operatively connected with said soot sensor (10) to receive a measurement signal from said soot sensor (10); said sensor controller (22) being configured to run a plausibility check that includes ascertaining whether said measurement signal (61) agrees with an expected finding (66); **characterized in that** said sensor controller (22) is configured to detect presence of and/or produce conditions for condensation of a liquid, e.g. water, from said exhaust gas stream on said sensor surface (14), and **in that** said plausibility check includes ascertaining whether said measurement signal (61) reflects (60) said condensation of liquid.

11. The exhaust gas treatment device (30) according to claim 10, wherein said sensor controller (22) is configured to detect presence of and/or achieving conditions for evaporation of said liquid from said sensor surface (14) and wherein said plausibility check includes ascertaining whether said measurement signal (61) reflects (62) said evaporation of liquid.

12. The exhaust gas treatment device (30) according to claim 10, comprising a particulate filter (46) arranged upstream of said soot sensor (10).

13. The exhaust gas treatment device (30) according to any one of claims 10 to 12, wherein said soot sensor (10) comprises a heating element (20) to cause evaporation of said liquid from said sensor surface (14) and/or to purge said sensor surface (14) from soot (18) deposited thereon.

14. The exhaust gas treatment device (30) according to any one of claims 10 to 13, comprising a temperature sensor (50) operatively connected to said sensor controller (22), said sensor controller (22) being configured to estimate a temperature on said sensor surface (14) based upon a temperature signal received from said temperature sensor (50).

15. The exhaust gas treatment device (30) according to any one of claims 10 to 14, wherein said sensor controller (22) is operatively connected with an engine control unit (58) to receive temperature data and/or operational data of said compression-ignition engine (24).
